# EUROPEAN PATENT APPLICATION

(11) **EP 4 318 735 A1**
(43) Date of publication of application: **07.02.2024**
(21) Application number: 23155971.7
(22) Date of filing: 10.02.2023
(51) Int. Cl.: H01M 10/613, H01M 10/647, H01M 50/103, H01M 50/209, H01M 50/244, H01M 50/202, H01M 50/258, H01M 50/271

(54) **BATTERY AND BATTER DEVICE**

(30) Priority: 26.07.2022 CN 202210887068
(71) Applicant: CALB Co., Ltd., Changzhou City, Jiangsu Province (CN)
(72) Inventor: GU, Liangjie, Changzhou City (CN); GUAN, Junshan, Changzhou City (CN); YAN, Tinglu, Changzhou City (CN); ZHANG, Yongjie, Changzhou City (CN)
(74) Representative: Becker, Eberhard

(57) **Abstract**

The disclosure relates to the technical field of batteries, and particularly to a battery (100) and a battery device. The battery (100) has a prismatic structure, a top surface (101), a bottom surface (102), two first sides (103), and two second sides (104). The two first sides (103) are spaced apart along a first direction (X) and each perpendicular to the first direction (X). The two second sides (104) are spaced apart along a second direction (Y) and each perpendicular to the second direction (Y). The first direction (X) is perpendicular to the second direction (Y). An area of the first side (103) is greater than an area of the second side (104), a folded edge (110) is disposed on at least one edge of one of the first sides (103), and the folded edge (110) extends in the first direction (X).

## Description

### BACKGROUND

### Technical Field

The disclosure relates to the technical field of batteries, and particularly, to a battery and a battery device.

### Description of Related Art

Conventional batteries have a flange on their outer surface for heat dissipation. After a battery is configured into a box, the portion of the battery in contact with the box is usually the flange of the battery. Since the thickness of the flange is thin, its heat exchange area in contact with the box is approximately linear, resulting in a small heat exchange area between the battery and the box, which is unfavorable to battery heat dissipation. Moreover, the structural strength is poor, and it is inconvenient for the battery to be configured into the box.

### SUMMARY

According to one aspect of the disclosure, the battery with a prismatic structure is provided. The battery includes a top surface, a bottom surface, two first sides, and two second sides. The two first sides are spaced apart along a first direction and each perpendicular to the first direction. The two second sides are spaced apart along a second direction and each perpendicular to the second direction. The first direction is perpendicular to the second direction. An area of the first side is greater than an area of the second side. A folded edge is disposed on at least one edge of one of the first sides, and the folded edge extends along the first direction.

According to one aspect of the disclosure, a battery device including a box and a battery pack is provided. The battery pack is accommodated in the box and includes multiple batteries disposed along a first direction, and at least one of the batteries is the battery proposed by the disclosure.

### BRIEF DESCRIPTION OF THE DRAWING

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a perspective schematic structural view of a battery according to an exemplary embodiment.
FIG. 2 is a perspective exploded schematic view of the battery shown in FIG. 1.
FIG. 3 is a side view of the battery shown in FIG. 1.
FIG. 4 is an enlarged schematic view of part A in FIG. 3.
FIG. 5 is a perspective schematic structural view of a battery according to another exemplary embodiment.
FIG. 6 is a side view of a battery according to another exemplary embodiment.
FIG. 7 is a perspective structural schematic view of a partial structure of a battery device according to an exemplary embodiment.
FIG. 8 is a side view of a partial structure of the battery device shown in FIG. 7.
FIG. 9 is an enlarged schematic view of part B in FIG. 8.
FIG. 10 is an enlarged schematic view of part C in FIG. 9.
FIG. 11 is a side view of a partial structure of a battery device according to another exemplary embodiment.
FIG. 12 is an enlarged schematic view of part D in FIG. 11.
FIG. 13 is a partial enlarged view of a partial structure of a battery device according to another exemplary embodiment.
FIG. 14 is an enlarged schematic view of part E in FIG. 13.
FIG. 15 is a partial enlarged view of a partial structure of a battery device according to another exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

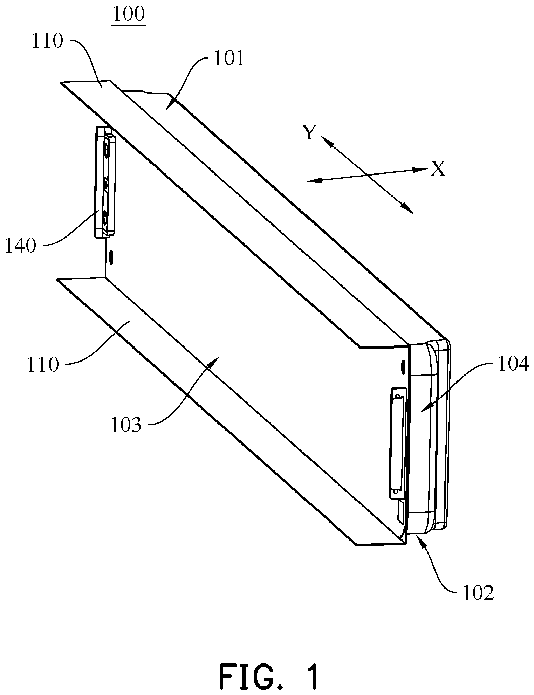

Referring to FIG. 1, FIG. 1 representatively illustrates a perspective schematic structural view of a battery 100 proposed by the disclosure. In the exemplary embodiment, the battery 100 proposed by the disclosure is illustrated as an application to a vehicle-mounted battery. It is easily understood by those skilled in the art that to apply the related design of the disclosure to other types of batteries 100, various modifications, additions, substitutions, deletions or other changes may be made to the following specific embodiments, and the changes are still within the scope of the rationales of the battery 100 proposed by the disclosure.

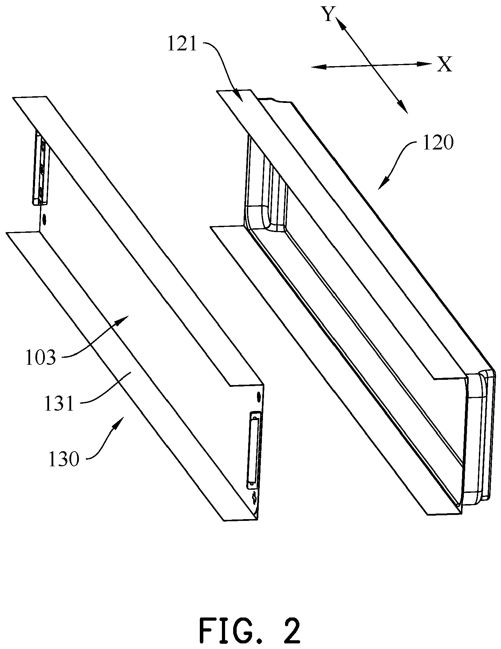

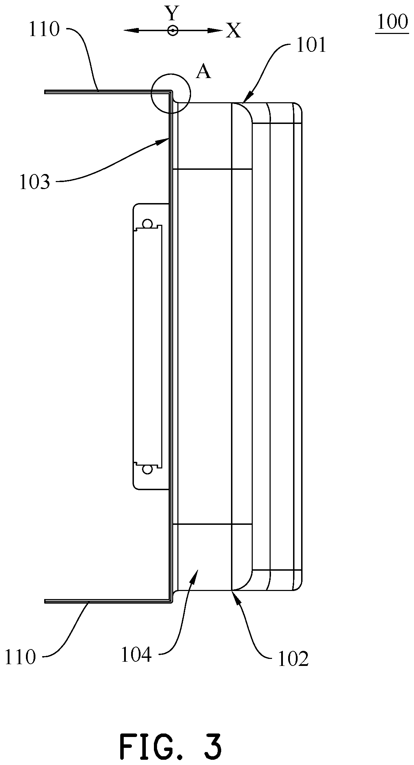

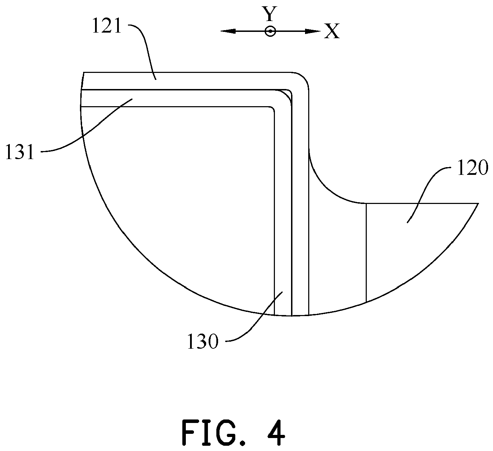

As shown in FIG. 1, in an embodiment of the disclosure, the battery 100 proposed by the disclosure has a prismatic structure, a top surface 101, a bottom surface 102, two first sides 103, and two second sides 104. The two first sides 103 are spaced apart along a first direction X and are each perpendicular to the first direction X. The two second sides 104 are spaced apart along a second direction Y and are each perpendicular to the second direction Y. The first direction X is perpendicular to the second direction Y. Referring to FIG. 2 to FIG. 4, FIG. 2 representatively illustrates a perspective exploded schematic view of the battery 100; FIG. 3 representatively illustrates a side view of the battery 100; FIG. 4 representatively illustrates an enlarged schematic view of part A in FIG. 3. The structure, the connection manner, and the functional relationship of the main components of the battery 100 proposed by the disclosure are illustrated in detail in the subsequent paragraphs with reference to the drawings.

As shown in FIG. 1 to FIG. 3, in an embodiment of the disclosure, a folded edge 110 is disposed on at least one edge of one first side 103 of the battery 100. The folded edge 110 extends along the first direction X. Note that the so-called edge of the first side 103 may be at least one of the four edges of the first side 103. The four edges may be located at the junction of the first side 103 and the top surface 101, the junction of the first side 103 and the bottom surface 102, and the junction of the first side 103 and the two second sides 104, respectively. With the design, in the disclosure, the planar contact form between the edge of the battery 100 and the external structure may be implemented through the folded edge 110, thereby increasing the heat exchange area between the battery 100 and the external structure and improving the heat dissipation performance of the battery 100. In addition, the disclosure may enhance the structural strength of the battery 100 with the folded edge 110, which makes it easy for the battery 100 to be configured into the box.

As shown in FIG. 1, in an embodiment of the disclosure, the pole assembly of the battery 100 is disposed on the first side 103 having the folded edge 110.

Note that in the embodiments shown in FIG. 1 to FIG. 3, the battery 100 including two folded edges 110 is illustrated as an example. The two folded edges 110 are each located on the upper edge and the lower edge of the first side 103, i.e., the junction of the first side 103 and the top surface 101 and the junction of the first side 103 and the bottom surface 102. In some embodiments, the folded edge 110 may also be disposed on the edges of the two sides of the first side 103, i.e., the junction of the first side 103 and the second side 104, but the disclosure is not limited to the embodiment.

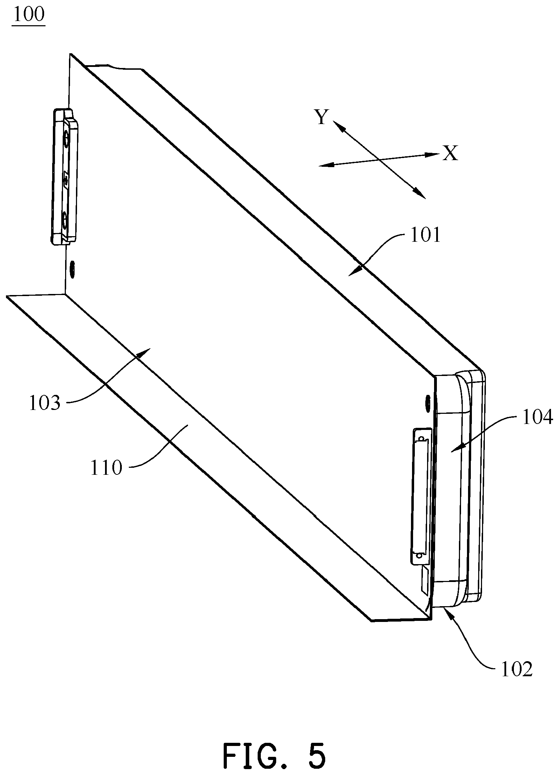

Referring to FIG. 5, FIG. 5 representatively illustrates a perspective schematic structural view of the battery 100 capable of implementing the rationales of the disclosure according to another exemplary embodiment.

As shown in FIG. 5, in an embodiment of the disclosure, the first side 103 includes only one folded edge 110, and the folded edge 110 is located at the lower edge of the first side 103, i.e., the junction of the first side 103 and the top surface 101. With the design, in the disclosure, the contact area may at least be increased between the bottom of the battery 100 and the external structure. In some embodiments, the folded edge 110 may also be disposed on the upper edge of the first side 103. In other words, in various possible implementations consistent with the design concept of the disclosure, the folded edge 110 is disposed on at least one of the upper edge and the lower edge of the first side 103.

As shown in FIG. 1 to FIG. 3, in an embodiment of the disclosure, the folded edge 110 and the battery 100 may be integrally formed. With the design, the disclosure may enhance the structural strength of the battery 100, contributing to a reduced quantity of components and facilitating the processing and the assembly of the battery 100.

As shown in FIG. 4, in an embodiment of the disclosure, the battery 100 includes a case 120 and a cover plate 130. Specifically, the side of the case 120 facing the first direction X is an opening. The cover plate 130 is disposed at the opening and closes the opening, and the side of the cover plate 130 facing away from the case 120 defines one first side 103, i.e., the first side 103 configured with the folded edge 110. Accordingly, a first folded edge 121 may be disposed on the edge of the case 120 located at the opening, and a second folded edge 131 is disposed on the edge of the cover plate 130. The shape of the first folded edge 121 matches and fits the shape of the second folded edge 131, and the first folded edge 121 and the second folded edge 131 together form the folded edge 110 of the battery 100. With the design, the disclosure may further enhance the structural strength of the folded edge 110, contributing to the improvement of the bonding strength between the case 120 and the cover plate 130 of the battery 100. In some embodiments, the folded edge 110 may also be disposed only on the cover plate 130 or only on the case 120, but the disclosure is not limited to the embodiment.

As shown in FIG. 4, based on the design in which the folded edge 110 is composed of the first folded edge 121 and the second folded edge 131, in an embodiment of the disclosure, the first folded edge 121 may completely fit the second folded edge 131. With the design, the disclosure may further optimize the structural integrity of the folded edge 110 composed of the first folded edge 121 and the second folded edge 131 and further enhance the structural strength of each position of the folded edge 110. In some embodiments, the first folded edge 121 may also partially fit the second folded edge 131. For example, the extension end of one of the first folded edge 121 and the second folded edge 131 may be farther away from the first side 103 than the extension end of the other of the first folded edge 121 and the second folded edge 131, but the disclosure is not limited to the embodiment.

As shown in FIG. 4, based on the design in which the folded edge 110 is composed of the first folded edge 121 and the second folded edge 131, in an embodiment of the disclosure, the first folded edge 121 and the second folded edge 131 are not connected. With the design, the disclosure contributes to facilitating the assembly process of the battery 100 and improving the assembly efficiency. Meanwhile, because of no configuration of the connection structure to implement the connection between the first folded edge 121 and the second folded edge 131, the disclosure may also prevent a large increase in the weight of the battery 100. In some embodiments, the first folded edge 121 and the second folded edge 131 may also adopt a connected design, such as but not limited to being connected by riveting, bonding or welding, but the disclosure is not limited to the embodiment.

For example, in some embodiments, when the battery 100 includes the case 120 and the cover plate 130, the folded edge 110 may only be disposed on the edge of the case 120 located at the opening, and this may also be interpreted as that the folded edge 110 is only composed of the first folded edge 121. In another example, the folded edge 110 may only be disposed on the edge of the cover plate 130, and this may also be interpreted as that the folded edge 110 is only composed of the second folded edge 131, but the disclosure is not limited to the embodiments.

As shown in FIG. 3 and FIG. 4, in an embodiment of the disclosure, the cross section of the folded edge 110 may be substantially bent at a right angle.

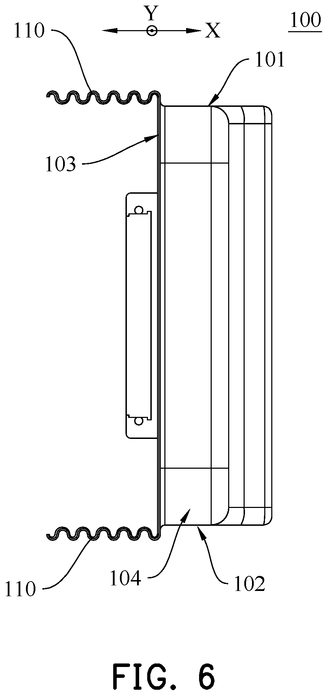

Referring to FIG. 6, FIG. 6 representatively illustrates a side view of the battery 100 capable of implementing the rationales of the disclosure according to another exemplary embodiment.

As shown in FIG. 6, in an embodiment of the disclosure, the cross section of the folded edge 110 may be substantially wavy. With the design, the disclosure may further enhance the structural strength of the folded edge 110, thereby improving the overall structural strength of the battery 100. Moreover, since the surface area of the wavy structure is greater than that of the flat structure when the length is the same, the folded edge 110 with the wavy structure may have a larger heat conduction area, which further contributes to the heat dissipation of the battery 100. In addition, when the folded edge 110 is disposed on the lower edge of the first side 103, after a pack of the batteries 100 are configured into the box, the folded edge 110 may make larger space for adhesive between the battery 100 and a structure such as a bottom plate or a heat exchange plate of the battery device, thereby increasing the capacity of adhesive. In some embodiments, the cross section of the folded edge 110 may also have other shapes, such as but not limited to a zigzag, but the disclosure is not limited to the embodiment.

As shown in FIG. 1, in an embodiment of the disclosure, the area of the first side 103 is greater than the area of the second side 104.

As shown in FIG. 1, in an embodiment of the disclosure, the battery 100 proposed by the disclosure may be a quadrangular prism battery.

Note that the batteries shown in the drawings and illustrated in the specification are but a few examples of the many types of batteries that may adopt the rationales of the disclosure. It should be clearly understood that the rationales of the disclosure by no means limited to any detail or any component of the battery device shown in the drawings or illustrated in the specification.

In summary, in the battery 100 proposed by the disclosure, the folded edge 110 is disposed on at least one edge of the first side 103, and the folded edge 110 extends along the first direction X perpendicular to the first side 103. With the design, in the disclosure, the planar contact form between the edge of the battery 100 and the external structure is implemented through the folded edge 110, thereby increasing the heat exchange area between the battery 100 and the external structure and improving the heat dissipation performance of the battery 100. In addition, with the folded edge 110, the disclosure enhances the structural strength of the battery 100 and makes it easy for the battery 100 to be configured into the box.

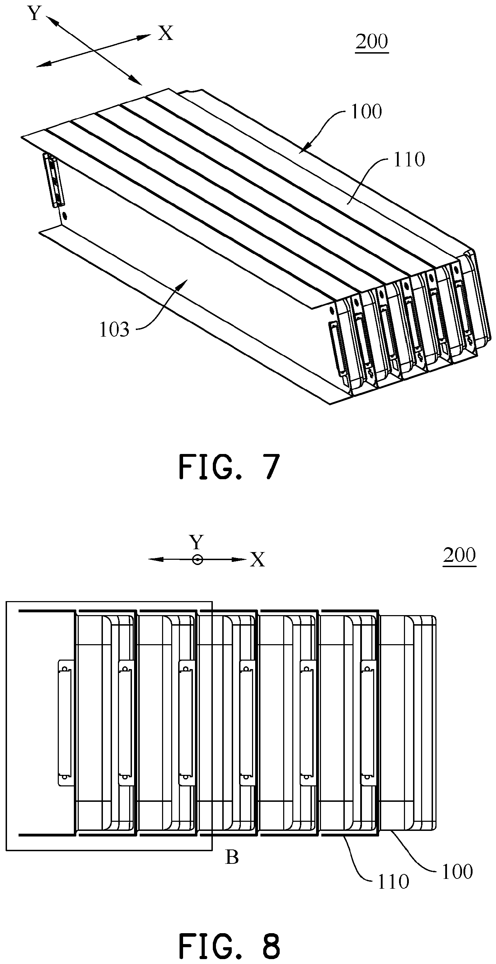

Referring to FIG. 7, FIG. 7 representatively illustrates a perspective structural schematic view of a partial structure of a battery device proposed by the disclosure, where a perspective structure of a battery pack 200 of the battery device is specifically illustrated. In the exemplary embodiment, the battery 100 proposed by the disclosure is illustrated as a vehicle-mounted battery. It is easily understood by those skilled in the art that to apply the related design of the disclosure to other types of batteries devices, various modifications, additions, substitutions, deletions or other changes may be made to the following specific embodiments, and the changes are still within the scope of the rationales of the battery 100 proposed by the disclosure

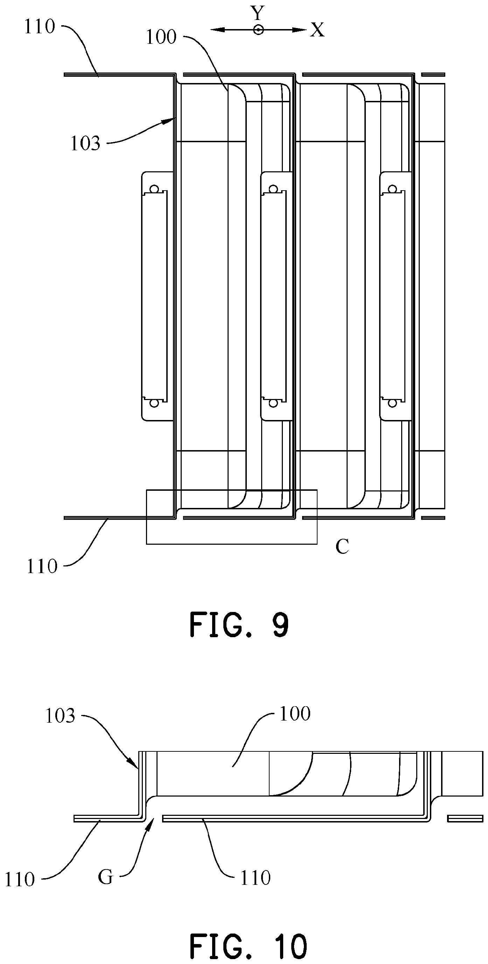

As shown in FIG. 7, in an embodiment of the disclosure, the battery device proposed by the disclosure includes a box (not shown in the drawings) and the battery pack 200. The battery pack 200 is accommodated in the box. Referring to FIG. 8 to FIG. 10, FIG. 8 representatively illustrates a side view of a partial structure of the battery device; FIG. 9 representatively illustrates an enlarged schematic view of part B in FIG. 8; FIG. 10 representatively illustrates an enlarged schematic view of part C in FIG. 9. The structure, the connection manner, and the functional relationship of the main components of the battery device proposed by the disclosure are illustrated in detail in the subsequent paragraphs with reference to the drawings.

As shown in FIG. 7 to FIG. 9, in an embodiment of the disclosure, the battery pack 200 includes multiple batteries 100 disposed along the first direction X, and at least one of the batteries 100 is the battery 100 proposed by the disclosure and illustrated in detail in the embodiments. Accordingly, with the battery 100 proposed by the disclosure, the battery device proposed by the disclosure may improve the heat dissipation performance of the battery 100, enhance the structural strength of the battery 100, and make it easy for the battery 100 to be configured into the box.

In an embodiment of the disclosure, the battery device proposed by the disclosure further includes a bottom plate (not shown in the drawings), and the bottom plate is located on the bottom surface 102 of the battery pack 200. Accordingly, at least part of the folded edge 110 of the battery 100 is attached to the bottom plate. With the design, the disclosure may effectively reduce the thermal resistance and improve the heat dissipation performance of the battery 100 through the design in which the folded edge 110 is attached to the bottom plate. In addition, compared with the conventional bottom plate requiring the configuration of an accommodating structure to accommodate the flange of the battery 100, the disclosure requires no such accommodating structure on the bottom plate, which further facilitates the structural complexity and the assembly.

Based on the design in which the folded edge 110 is attached to the bottom plate, in an embodiment of the disclosure, the folded edge 110 and the bottom plate may be bonded by adhesive. With the design, the disclosure may reduce the thickness of the thermally conductive adhesive layer and the amount of adhesive applied between the battery 100 and the bottom plate, reduce cost and weight, reduce thermal resistance, and improve thermal conductivity. In contrast, the battery 100 of the conventional battery device has its flange abutting on the bottom plate, that is, the distance between the bottom surface 102 of the body of the battery 100 and the bottom plate is the thickness of the adhesive, resulting in a thicker thickness of the adhesive.

As shown in FIG. 10, based on the design in which the folded edge 110 is attached to and adhesively bonded to the bottom plate, in an embodiment of the disclosure, the folded edges 110 may be disposed on the edges of the first sides 103 of the two adjacent batteries 100 corresponding to the bottom plate. Accordingly, along the first direction X, there may be a gap G between the two adjacent folded edges 110 corresponding to the bottom plate. With the design, the disclosure may allow the structural adhesive between the folded edge 110 and the bottom plate to enter the accommodating area formed by the folded edge 110 and the first side 103 through the gap G, the adhesion between the folded edge 110 and the adjacent batteries 100 is implemented with some of the structural adhesive, and the bonding strength between the battery 100 and the box and the bonding strength between adjacent batteries 100 are further improved. In addition, the disclosure may reduce the thickness of the thermally conductive adhesive layer and the amount of adhesive applied between the battery 100 and the bottom plate, thereby reducing cost and weight, reducing thermal resistance, and improving thermal conductivity. In addition, the folded edge 110 and the adjacent battery 100 may be pre-glued, for example, by foam glue, etc., so the amount of structural adhesive with high density and high cost between the folded edge 110 and the bottom plate may be reduced.

In an embodiment of the disclosure, the battery device proposed by the disclosure further includes a heat exchange plate (not shown in the drawings), and the heat exchange plate is located on the top surface 101 of the battery pack 200. Accordingly, at least part of the folded edge 110 of the battery 100 is attached to the heat exchange plate. With the design, the disclosure may effectively reduce the thermal resistance and improve the heat dissipation performance of the battery 100 through the bonding design of the folded edge 110 and the heat exchange plate. Moreover, compared with the conventional heat exchange plate requiring the configuration of an accommodating structure to accommodate the flange of the battery 100, the disclosure requires no such accommodating structure on the heat exchange plate, which further facilitates the structural complexity and the assembly. In some embodiments, the heat exchange plate may also be located on the bottom surface 102 or the second side 104 of the battery 100, and meanwhile the folded edge 110 attached to the heat exchange plate may be disposed on the edge of the first side 103 corresponding to the heat exchange plate. Moreover, when a bottom plate is disposed on the bottom surface 102 of the battery 100 and the heat exchange plate is located on the bottom surface 102 of the battery 100, the heat exchange plate may be located between the bottom plate and the battery 100. In another example, when the heat exchange plate is disposed on the bottom surface 102 of the battery 100, an additional bottom plate may be disposed on the battery device, that is, the heat exchange plate may be configured as the bottom plate. In other words, a heat exchange structure, such as a channel and the like is disposed on the bottom plate. Accordingly, the bottom plate is equivalent to the heat exchange plate, but the disclosure is not limited to the embodiments.

Based on the design in which the folded edge 110 is attached to the heat exchange plate, in an embodiment of the disclosure, the folded edge 110 and the heat exchange plate may be bonded by adhesive. With the design, the disclosure may reduce the thickness of the thermally conductive adhesive layer and the amount of adhesive applied between the battery 100 and the heat exchange plate, reduce cost and weight, reduce thermal resistance, and improve thermal conductivity. In contrast, the battery 100 of the conventional battery device has its flange abutting on the heat exchange plate, that is, the distance between the bottom surface 102 of the body of the battery 100 and the heat exchange plate is the thickness of the adhesive, resulting in a thicker thickness of the adhesive.

As shown in FIG. 10, based on the design in which the folded edge 110 is attached to and adhesively bonded to the heat exchange plate, in an embodiment of the disclosure, the folded edges 110 may be disposed on the edges of the first sides 103 of the two adjacent batteries 100 corresponding to the heat exchange plate. Accordingly, along the first direction X, there may be the gap G between the two adjacent folded edges 110 corresponding to the heat exchange plate. With the design, the disclosure may allow the structural adhesive between the folded edge 110 and the heat exchange plate to enter the accommodating area formed by the folded edge 110 and the first side 103 through the gap G, the adhesion between the folded edge 110 and the adjacent batteries 100 is implemented with some of the structural adhesive, and the bonding strength between the battery 100 and the box and the bonding strength between adjacent batteries 100 are further improved. In addition, the disclosure may reduce the thickness of the thermally conductive adhesive layer and the amount of adhesive applied between the battery 100 and the heat exchange plate, thereby reducing cost and weight, reducing thermal resistance, and improving thermal conductivity. In addition, the folded edge 110 and the adjacent battery 100 may be pre-glued, for example, by foam glue, etc., so the amount of structural adhesive with high density and high cost between the folded edge 110 and the bottom plate may be reduced.

As shown in FIG. 8 and FIG. 9, in an embodiment of the disclosure, for any adjacent two of multiple batteries 100, including the adjacent first battery 100 and the second battery 100, the folded edge 110 extending toward the second battery 100 is disposed on the first battery 100. The folded edge 110 and the first side 103 form an accommodating space, and the accommodating space is configured to accommodate at least part of the second battery 100. With the design, the disclosure may further implement the assembly and fixation of the batteries 100 with the folded edges 110 and improve the assembly efficiency as well as the overall bonding strength and the rigidity of the battery pack 200.

As shown in FIG. 9, based on the design in which the accommodating space formed by the folded edge 110 and the first side 103 is configured to accommodate at least part of the adjacent battery 100, in an embodiment of the disclosure, a length L of the folded edge 110 along the first direction X may be equal to a thickness D of the second battery 100 along the first direction X (the fact that the gap G may co-exist is ignored). Accordingly, the accommodating space may accommodate the entire second battery 100. With the design, the disclosure may further improve the assembly efficiency and the overall bonding strength and the rigidity of the battery pack 200.

Based on the design in which the accommodating space formed by the folded edge 110 and the first side 103 is configured to accommodate at least part of the adjacent battery 100, in an embodiment of the disclosure, the folded edge 110 and the adjacent battery 100 may be bonded by adhesive (the adhesive layer for bonding the folded edge 110 and the adjacent battery 100 is not shown in the drawings). With the structural design, the disclosure may strengthen the bonding strength of adjacent batteries and improve the battery assembly effect.

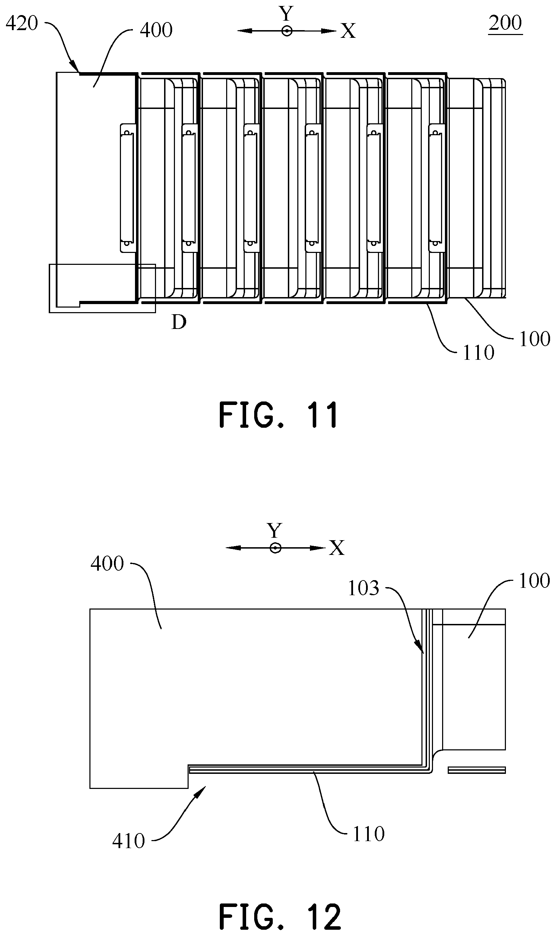

Referring to FIG. 11 and FIG. 12, FIG. 11 representatively illustrates a side view of a partial structure of a battery device capable of implementing the rationales of the disclosure according to another exemplary embodiment; FIG. 12 representatively illustrates an enlarged schematic view of part D in FIG. 11.

As shown in FIG. 11 and FIG. 12, in an embodiment of the disclosure, the battery device proposed by the disclosure may further include a fixing portion 400 located at an end of the battery pack 200 along the first direction X. Accordingly, the folded edge 110 extending toward the fixing portion 400 may be disposed on the battery 100 adjacent to the fixing portion 400. The accommodating space formed by the folded edge 110 and the first side 103 may accommodate at least part of the fixing portion 400. With the design, the disclosure may improve the assembly efficiency of the battery pack 200 and the box as well as the overall bonding strength and the rigidity of the battery pack 200 and the box.

As shown in FIG. 12, based on the design in which the accommodating space formed by the folded edge 110 and the first side 103 may accommodate at least part of the fixing portion 400, in an embodiment of the disclosure, the box may further include a bottom plate (not shown in the drawings), the fixing portion 400 is fixed on the bottom plate, and the battery pack 200 is carried by the bottom plate. Accordingly, the folded edge 110 extending toward the fixing portion 400 may be disposed on the lower edge of the first side 103 of the battery 100, and a first concave portion 410 is disposed on the bottom surface of the fixing portion 400. The first concave portion 410 is open on a side of the fixing portion 400 adjacent to the battery 100, the first concave portion 410 and the bottom plate form an accommodating space, and the folded edge 110 is accommodated in the accommodating space.

As shown in FIG. 12, based on the design in which the box of the battery device includes the fixing portion 400, in an embodiment of the disclosure, the folded edge 110 extending toward the fixing portion 400 may be disposed on the upper edge of the first side 103 of the battery 100. Accordingly, the folded edge 110 may cover at least part of the top surface of the fixing portion 400.

As shown in FIG. 12, based on the design in which the folded edge 110 covering the top surface 101 of the fixing portion 400 is disposed on the upper edge of the first side 103 of the battery 100, in an embodiment of the disclosure, a second concave portion 420 may be disposed on the top surface of the fixing portion 400, the second concave portion 420 is open on a side of the fixing portion 400 adjacent to the battery 100, and the folded edge 110 is accommodated in the second concave portion 420.

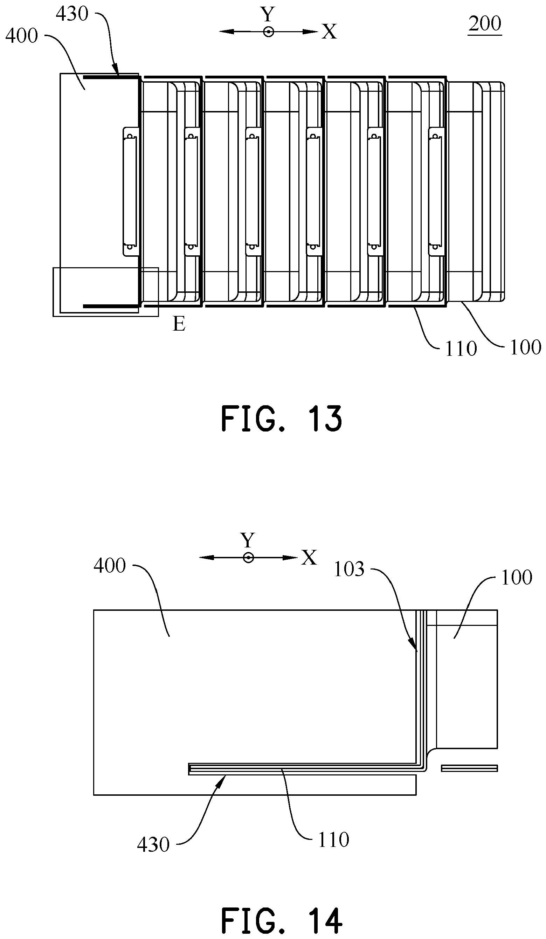

Referring to FIG. 13 and FIG. 14, FIG. 13 representatively illustrates a side view of a partial structure of a battery device capable of implementing the rationales of the disclosure according to another exemplary embodiment; FIG. 14 representatively illustrates an enlarged schematic view of part E in FIG. 13.

As shown in FIG. 13 and FIG. 14, in an embodiment of the disclosure, an accommodating groove 430 may be disposed on a side surface of the fixing portion 400 facing the battery 100, and the folded edge 110 is accommodated in the accommodating groove 430.

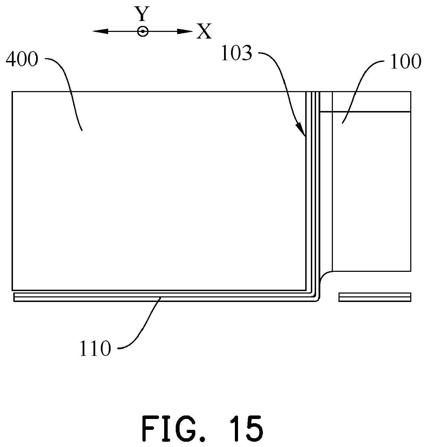

Referring to FIG. 15, FIG. 15 representatively illustrates a partial enlarged schematic view of a battery device capable of implementing the rationales of the disclosure according to another exemplary embodiment. Moreover, for the specific enlarged area, refer to the enlarged area of FIG 11 illustrated in FIG. 12.

As shown in FIG. 15, in an embodiment of the disclosure, the box further includes a frame (not shown in the drawings), and two ends of the fixing portion 400 of the box are fixed to the frame. Accordingly, the folded edge 110 extending toward the fixing portion 400 is disposed on the lower edge of the first side 103 of the battery 100, there is a gap between the bottom surface of the fixing portion 400 and the bottom plate to form an accommodating space, and the folded edge 110 is accommodated in the accommodating space and covers the entire bottom surface of the fixing portion 400. In some embodiments, when there is a gap between the fixing portion 400 and the bottom plate to form an accommodating space for accommodating the folded edge 110, the folded edge 110 may also cover part of the bottom surface of the fixing portion 400, but the disclosure is not limited to the embodiment.

Note that the fixing portion 400 illustrated in the foregoing embodiments may be a structural beam of the box or an end plate of the battery pack.

As shown in FIG. 8, in an embodiment of the disclosure, among the batteries 100 of the battery pack 200, the folded edges 110 may be disposed on the lower edges of the first sides 103 of at least two batteries 100. Accordingly, each folded edge 110 may be located on the same plane. With the design, the disclosure may enhance the bonding strength and the stability of the bottom of the battery pack 200 and the box.

As shown in FIG. 8, in an embodiment of the disclosure, among the batteries 100 of the battery pack 200, the folded edges 110 may be disposed on the upper edges of the first sides 103 of at least two batteries 100. Accordingly, each folded edge 110 may be located on the same plane. With the design, the disclosure may enhance the bonding strength and the stability of the top of the battery pack 200 and the box.

Note that the battery device shown in the drawings and illustrated in the specification are but a few examples of the many types of battery devices that may adopt the principles of the disclosure. It should be clearly understood that the rationales of the disclosure are by no means limited to any detail or any component of the battery device shown in the drawings or illustrated in the specification.

In summary, with the battery 100 proposed by the disclosure, the battery device of the disclosure is capable of improving the heat dissipation performance of the battery 100, enhancing the structural strength of the battery 100, and making it easy for the battery 100 to be configured into the box.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

## Claims

1. A battery (100), wherein the battery (100) with a prismatic structure comprises a top surface (101), a bottom surface (102), two first sides (103), and two second sides (104); the two first sides (103) are spaced apart along a first direction (X) and each perpendicular to the first direction (X); the two second sides (104) are spaced apart along a second direction (Y) and each perpendicular to the second direction (Y); the first direction (X) is perpendicular to the second direction (Y); an area of the first side (103) is greater than an area of the second side (104); a folded edge (110) is disposed on at least one edge of one of the first sides (103); and the folded edge (110) extends along the first direction (X).

2. The battery (100) according to claim 1, wherein the folded edge (110) is disposed on at least one of an upper edge and a lower edge of the first side (103).

3. The battery (100) according to claim 1, wherein the folded edge (110) and the battery (100) are integrally formed.

4. The battery (100) according to claim 1, wherein the battery (100) comprises a case (120) and a cover plate (130), a side of the case (120) facing the first direction (X) is an opening, the cover plate (130) is disposed and closes the opening, and a side of the cover plate (130) facing away from the case (120) defines one of the first side (103); wherein
the folded edge (110) is disposed on an edge of the case (120) at the opening; or
the folded edge (110) is disposed on an edge of the cover plate (130).

5. The battery (100) according to claim 1, wherein the battery (100) comprises a case (120) and a cover plate (130), a side of the case (120) facing the first direction (X) is an opening, the cover plate (130) is disposed and closes the opening, and a side of the cover plate (130) facing away from the case (120) defines one of the first side (103); wherein a first folded edge (121) is disposed on an edge of the case (120) at the opening, a second folded edge (131) is disposed on an edge of the cover plate (130), a shape of the first folded edge (121) matches and fits a shape of the second folded edge (131), and the first folded edge (121) and the second folded edge (131) together form the folded edge (110).

6. The battery (100) according to claim 5, wherein the first folded edge (121) completely fits the second folded edge (131).

7. The battery (100) according to claim 5, wherein the first folded edge (121) and the second folded edge (131) are not connected, or the first folded edge (121) and the second folded edge (131) are connected by riveting, bonding, or welding.

8. The battery (100) according to claim 1, wherein a cross section of the folded edge (110) is wavy.

9. The battery (100) according to claim 1, wherein a cross section of the folded edge (110) is bent at a right angle.

10. A battery device comprising a box and a battery pack (200), wherein the battery pack (200) is accommodated in the box and comprises a plurality of batteries (100) disposed along the first direction (X), wherein at least one of the plurality of batteries (100) is any battery (100) of claim 1 to claim 9.

11. The battery device according to claim 10, further comprising a bottom plate, wherein the bottom plate is located on a bottom surface (102) of the battery pack (200), wherein the folded edge (110) is attached to the bottom plate.

12. The battery device according to claim 11, wherein the folded edge (110) is adhesively bonded to the bottom plate.

13. The battery device according to claim 12, wherein the folded edges (110) are disposed on edges of the first sides (103) of two adjacent batteries (100) corresponding to the bottom plate, and there is a gap (G) between the two folded edges (110) along the first direction (X).

14. The battery device according to claim 10, further comprising a heat exchange plate, wherein the heat exchange plate is located on at least one of a top surface (101), a bottom surface (102), and a second side (104) of the battery pack (200), wherein the folded edge (110) is attached to the heat exchange plate.

15. The battery device according to claim 14, wherein the folded edge (110) is adhesively bonded to the heat exchange plate.

16. The battery device according to claim 15, wherein the folded edges (110) are disposed on edges of the first sides (103) of two adjacent batteries (100) corresponding to the heat exchange plate, and there is a gap (G) between the two folded edges (110) along the first direction (X).

17. The battery device according to claim 10, wherein the plurality of batteries (100) comprise a first battery (100) and a second battery (100) adjacent to each other, the folded edge (110) extending toward the second battery (100) is disposed on the first battery (100), the folded edge (110) and the first side (103) form an accommodating space, and the accommodating space is configured for accommodating at least part of the second battery (100).

18. The battery device according to claim 17, wherein the folded edge (110) is adhesively bonded to the adjacent battery (100).

19. The battery device according to claim 17, wherein a length of the folded edge (110) along the first direction (X) is equal to a thickness of the second battery (100) along the first direction (X), and the accommodating space is configured for accommodating the entire second battery (100).

20. The battery device according to claim 10, further comprising a fixing portion (400), wherein the fixing portion (400) is located at an end of the battery pack (200) along the first direction (X), wherein the folded edge (110) extending toward the fixing portion (400) is disposed on the battery (100) adjacent to the fixing portion (400), the folded edge (110) and the first side (103) form an accommodating space, and the accommodating space accommodates at least part of the fixing portion (400).

21. The battery device according to claim 20, wherein the box further comprises a bottom plate, and the fixing portion (400) is fixed on the bottom plate, wherein the folded edge (110) extending toward the fixing portion (400) is disposed on a lower edge of the first side (103) of the battery (100), a first concave portion (410) is disposed on a bottom surface of the fixing portion (400), the first concave portion (410) is open on a side of the fixing portion (400) adjacent to the battery (100), the first concave portion (410) and the bottom plate form an accommodating space, and the folded edge (110) is accommodated in the accommodating space.

22. The battery device according to claim 20, wherein the box further comprises a bottom plate and a frame, and two ends of the fixing portion (400) are fixed to the frame, wherein the folded edge (110) extending toward the fixing portion (400) is disposed on a lower edge of the first side (103) of the battery (100), there is a gap between a bottom surface of the fixing portion (400) and the bottom plate to form an accommodating space, and the folded edge (110) is accommodated in the accommodating space and covers at least part of the bottom surface of the fixing portion (400).

23. The battery device according to claim 20, wherein the folded edge (110) extending toward the fixing portion (400) is disposed on an upper edge of the first side (103) of the battery (100), wherein the folded edge (110) covers at least part of a top surface of the fixing portion (400).

24. The battery device according to claim 23, wherein a second concave portion (420) is disposed on the top surface of the fixing portion (400), the second concave portion (420) is open on a side of the fixing portion (400) adjacent to the battery (100), and the folded edge (110) is accommodated in the second concave portion (420).

25. The battery device according to claim 20, wherein an accommodating groove (430) is disposed on a side surface of the fixing portion (400) facing the battery (100), and the folded edge (110) is accommodated in the accommodating groove (430).

26. The battery device according to claim 10, wherein
the folded edges (110) are disposed on lower edges of the first sides (103) of at least two of the plurality of batteries (100), and each of the folded edges (110) is located on a same plane; and/or
the folded edges (110) are disposed on upper edges of the first sides (103) of at least two of the plurality of batteries (100), and each of the folded edges (110) is located on a same plane.
